# EUROPÄISCHE PATENTSCHRIFT

(11) **EP 1 761 978 B1**
(45) Veröffentlichungstag und Bekanntmachung des Hinweises auf die Patenterteilung: **23.07.2008**
(21) Anmeldenummer: 05751637.9
(22) Anmeldetag: 03.06.2005
(51) Int. Cl.: H01S 3/067, H01S 3/06, H01S 3/094, B23K 26/00

(54) **HOCHLEISTUNGS-FASERVERSTÄRKER UND -FASEROSZILLATOR**
HIGH-POWER FIBRE AMPLIFIER AND FIBRE OSCILLATOR
AMPLIFICATEUR A FIBRE ET OSCILLATEUR A FIBRE HAUTE PERFORMANCE

(30) Priorität: 05.06.2004 DE 102004027625
(43) Veröffentlichungstag der Anmeldung: 14.03.2007
(73) Patentinhaber: TRUMPF Laser GmbH + Co. KG, 78713 Schramberg (DE)
(72) Erfinder: KUMKAR, Malte, 78713 Schramberg (DE); VOSS, Andreas, 70563 Stuttgart (DE)
(74) Vertreter: Rank, Christoph
(86) Internationale Anmeldenummer: PCT/EP2005/005970
(87) Internationale Veröffentlichungsnummer: WO 2005/122345

(56) Entgegenhaltungen:
- EP-A- 1 030 416
- TANKALA K ET AL: "PM double-clad fibers for high-power lasers and amplifiers" PROCEEDINGS OF THE SPIE - CONFERENCE ADVANCES IN FIBER LASERS, SAN JOSE, CA, USA, 27-28 JANUARY 2003, Bd. 4974, 2003, Seiten 220-229, XP002339906 ISSN: 0277-786X
- CARTER A ET AL: "The road to kilowatt fiber lasers" PROCEEDINGS OF THE SPIE - CONFERENCE ON OPTICAL COMPONENTS AND MATERIALS, SAN JOSE, CA, USA, 26-27 JANUARY 2004, Bd. 5350, Nr. 1, 26. Januar 2004 (2004-01-26), Seiten 172-182, XP002339880 ISSN: 0277-786X
- DOMINIC V ET AL: "110 W fibre laser" ELECTRONICS LETTERS, IEE STEVENAGE, GB, Bd. 35, Nr. 14, 8. Juli 1999 (1999-07-08), Seiten 1158-1160, XP006012372 ISSN: 0013-5194
- TSANG Y H ET AL: "Efficient high power Yb<3+>-silica fibre laser cladding-pumped at 1064 nm" OPTICS COMMUNICATIONS, NORTH-HOLLAND PUBLISHING CO. AMSTERDAM, NL, Bd. 215, Nr. 4-6, 15. Januar 2003 (2003-01-15), Seiten 381-387, XP004402090 ISSN: 0030-4018
- JACKSON S D ET AL: "SEQUENCE LASING IN A GAIN-SWITCHED YB3+, ER3+-DOPED SILICA DOUBLE-CLAD FIBER LASER" APPLIED OPTICS, OPTICAL SOCIETY OF AMERICA,WASHINGTON, US, Bd. 41, Nr. 9, 20. März 2002 (2002-03-20), Seiten 1698-1703, XP001102358 ISSN: 0003-6935

## Beschreibung

Die vorliegende Erfindung betrifft einen Hochleistungs-Faserverstärker gemäß Oberbegriff von Anspruch 1, einen entsprechenden Faseroszillator sowie eine Laserbearbeitungsmaschine mit einem solchen Faseroszillator.

Ein derartiger Faserverstärker ist durch Tankala et al., "PM double-clad fibers for high power lasers and amplifiers", Proceedings of the SPIE - Conference Advances in Fiber Lasers, San Jose, CA, USA, 27.-28. Januar 2003, Bd. 4974, 2003, Seiten 220-229, bekannt geworden.

Kontinuierliche Laserstrahlung mit nahezu beugungsbegrenzter Strahlqualität lässt sich nach dem gegenwärtigen Stand der Technik mit einzelnen Laserdioden nur bei geringen Ausgangsleistungen (< 1 W) erzielen. Eine Leistungsskalierung durch kohärente Kopplung vieler Dioden ist grundsätzlich möglich, eine Realisierung im Multiwattbereich steht jedoch noch aus.

Um höhere Grundmodeleistungen mit gutem elektro-optischem Wirkungsgrad (10-30 %) im Spektalbereich um 1 µm zu erzielen, sind gegenwärtig mit Laserdioden gepumpte Festkörperlaser erforderlich. Unter Verwendung von Laserübergängen mit geringer thermischer Besetzung des unteren Laserniveaus (sog. Viemiveausysteme) sowie ausreichender Lebensdauer des oberen Laserniveaus und mit nicht zu geringen Absorptions- und Emissionsquerschnitten kann bereits mit Pumpquellen mäßiger Brillanz ein effizienter Grundmodebetrieb realisiert werden. Entscheidend hierfür ist, dass nur geringe thermooptische Effekte ("thermische Linse") im laseraktiven Medium auftreten. Bei Verwendung von stab- oder quaderförmigen Geometrien des laseraktiven Mediums ist dies nur bis zu etwa 5 bis 20 W Ausgangsleistung pro laseraktivem Element gewährleistet. Bei Grundmodeleistungen oberhalb von ca. 20 W pro Kristall ist bei einem Stablaser aufgrund von thermooptischen Effekten ein Grundmodebetrieb nur mit Einbußen im Wirkungsgrad und im dynamischen Stabilitätsbereich möglich; ein seitengepumpter Nd:YAG-Stab erreicht bei sorgfältig homogenisierter Pumplichtverteilung maximal rund 80 W Grundmodeleistung mit etwa 20 % optisch-optischem Wirkungsgrad.

Eine Grundmodeleistung von über 100 W aus einem einzelnen laseraktiven Medium lässt sich mit guter Effizienz (> 40 % optisch-optisch) nur mit Hilfe einer optimierten Geometrie des laseraktiven Mediums erzielen; hierbei kommt entweder ein Scheibenlaser oder ein Faserlaser in Betracht. Der Scheibenlaser weist aufgrund seines axialen, zur Resonatorstrahlung parallelen Wärmeflusses und seiner extrem kurzen optischen Weglänge stark reduzierte thermooptische Effekte auf, während der Faserlaser aufgrund der Wellenleitung der Laserstrahlung unempfindlich gegen thermooptische Effekte ist. Beide Geometrien benötigen eine relativ hohe Brillanz der Pumpstrahlung; ein typischer Wert für einen Yb:YAG-Scheibenlaser liegt bei etwa 5 kW/(mm·rad)², während ein einseitig endgepumpter Faserlaser mit 100 W Ausgangsleistung bei einem typischen Pumpkerndurchmesser von 0,4 mm und einer numerischen Apertur von 0,45 ca. 20 kW/(mm·rad)² benötigt. Die Skalierung der Ausgangsleistung erfolgt beim Scheibenlaser mit annähernd konstanter Brillanz der Pumpstrahlung, wobei die Strahlqualität bei gutem Wirkungsgrad nur bis rund 200 W beugungsbegrenzt gehalten werden kann. Die Ausgangsleistung des Faserlasers kann durch beidseitiges Pumpen bei gleicher Brillanz des Pumplichts auf ca. 200 W verdoppelt werden. Eine weitere Steigerung der Leistung ist möglich, erfordert aber eine proportionale Erhöhung der Brillanz des Pumplichts, sofern der Durchmesser und die numerische Apertur des Pumpkems konstant gehalten werden. Somit stellen Hochleistungs-Faserlaser mit Ausgangsleistungen über 500 W bei nahezu beugungsbegrenzter Strahlqualität sehr hohe Anforderungen an die Brillanz der Pumplichtquelle(n). Die Brillanz-Anforderungen können durch Erhöhung der numerischen Apertur des Pumpkerns oder durch Erhöhung des Pumpkemdurchmessers reduziert werden.

Bekannte Hochleistungs-Faserlaser werden mit aufwändig strahlgeformten Laserdiodenarrays hoher Brillanz endgepumpt. Die Wellenlänge des Pumplichts beträgt üblicherweise 980 oder 915 nm. Mit zunehmender Ausgangsleistung steigt die erforderliche Brillanz des Pumplichts, wodurch der Aufwand für die Strahlformung der Laserdioden ebenfalls ansteigt. Hochleistungslaserdiodenarrays ("Stacks") mit einer guten Fast-Axis-Kollimation weisen eine Brillanz von ca. 10-20 kW/(mm·rad)² auf, so dass für einen diodengepumpten Faserlaser mit 1 kW Ausgangsleistung weitere Maßnahmen für eine ca. fünf- bis zehnfache Brillanzerhöhung erforderlich sind. Hierzu zählen z.B. Polarisationskopplung, Slow-Axis-Kollimation und Wellenlängenmultiplex. Aufgrund der erforderlichen mehrstufigen optischen Transformationen ist der elektrisch-optische Wirkungsgrad dieser Pumplichtquellen mit hoher Brillanz erheblich geringer als der einer einfachen Pumplichtquelle. Gleichzeitig erhöht der benötigte optische Aufwand die Kosten der Pumplichtquellen sehr stark.

Der eingangs genannte Artikel von Tankala et al. offenbart einen Faserverstärker mit einer polarisationserhaltenden Double-Clad-Faser (PM-DCF) vom Panda-Typ, die einen Yb-dotierten Kern, eine numerische Apertur (NA) des Kerns von 0,06, einen Kerndurchmesser von 30 µm und einen Außenmanteldurchmesser von 400 µm aufweist. Diese Double-Clad-Faser wird mit einer Laserdiode gepumpt.

Carter et al., "The road to kiloWatt fiber lasers", Proceedings of the SPIE - Conference on Optical Components and Materials, San Jose, CA, USA, 26.-27. Januar 2004, Bd. 5350, Nr. 1, Seiten 172-182, offenbart ebenfalls einen Faserverstärker mit einer Double-Clad-Faser, die mit einem Diodenlaser gepumpt wird.

Dominic et al., "110 W fibre laser", Electronics Letters, Bd. 35, Nr. 14, 08 Juli 1999, Seiten 1158-1160, offenbart einen Faserlaser mit einer Double-Clad-Faser, die mit einem Laserdiodenbarrenpaket gepumpt wird.

Tsang et al., "Efficient high power Yb3+-silica fibre laser cladding-pumped at 1064 nm", Optics Communications, Bd. 215, Nr. 4-6, 15. Januar 2003, Seiten 381-387, und Jackson et al., "Sequence lasing in a gain-switched Yb3+, Er3+-doped silica double-clad fiber laser", Applied Optics, Bd. 41, Nr. 9, 20. März 2002, Seiten 1698-1703, offenbaren Festkörperlaser zur Anregung von Ytterbium-dotierten Double-Clad-Fasern mit Laserwellenlängen von 1064 nm bzw. 900 nm.

Schließlich ist aus EP-A-1 030 416 noch ein Ytterbium-dotierter Festkörperlaser zur Anregung eines mit Erbium und Ytterbium dotierten Faserlasers bekannt.

Demgegenüber ist es die Aufgabe der vorliegenden Erfindung, einen Hochleistungs-Faserverstärker der eingangs genannten Art mit hoher Leistung und annähernd beugungsbegrenzter Strahlqualität zu realisieren.

Diese Aufgabe wird erfindungsgemäß gelöst durch einen Hochleistungs-Faserverstärker mit den Merkmalen von Anspruch 1

Optisch angeregte Hochleistungs-Festkörperlaser als Pumpquelle bieten den Vorteil, dass die verfügbare Brillanz des Pumplichts des Hochleistungs-Festkörperlasers von über 5 MW/(mm·rad)² erheblich über dem minimal erforderlichen Wert für den Hochleistungs-Faserlaser liegt. Die Verwendung von Laserfasern mit separatem Pumpkem und laseraktivem Faserkern (sog. Doppelmantelfasem oder Double-Clad-Fasern) ermöglicht die Verwendung von Pumplicht, das eine deutlich geringere Brillanz aufweist als die Laserstrahlung am Faserausgang. Während bei Single-Mode-Fasem bereits mit beugungsbegrenzter Strahlqualität in den laseraktiven Kern gepumpt werden muss, erlauben Double-Clad-Fasern den Einsatz von Multimode-Festkörperlasern als Pumpquelle und somit höhere Ausgangsleistungen der Pumpstrahlung. Außerdem erlauben es Double-Clad-Fasem, höhere Pumpleistungen in die Laserfaser einzukoppeln, ohne die Laserfaser durch eine zu hohe Leistungsdichte im laseraktiven Kern zu zerstören.

Der Pumpkem der Double-Clad-Faser ist typischerweise erheblich (ca. 2- bis 50-fach) größer als der aktive Single-Mode-Faserkem; außerdem weist der Pumpkem eine ca. 2- bis 10-fach größere numerische Apertur als der Single-Mode-Kern auf. Insgesamt - also durch den größeren Kerndurchmesser in Verbindung mit der höheren numerischen Apertur des Pumpkerns - reduziert sich die Anforderung an die Strahlqualität des Pumplichts durch die Verwendung des separaten Pumpkems typischerweise um einen Faktor 10 bis 200 gegenüber dem direkten Pumpen in einen Single-Mode-Faserkern.

Zur Vermeidung bzw. Reduzierung von - bei hohen Laserleistungen auftretenden - nichtlinearen Effekten (z.B. Raman-Effekt) in der Laserfaser ist es wünschenswert, die Faserlänge möglichst kurz zu halten. Um trotzdem die Wärmeerzeugung pro Längeneinheit in der Laserfaser zu begrenzen, muss die relative Wärmeerzeugung (Wärmeleistung bezogen auf die Pumpleistung) in der Laserfaser minimiert werden. Um eine hohe Pumplichtabsorption bei gleichzeitig geringstmöglicher Wärmeentwicklung zu erreichen, wird erfindungsgemäß vorgeschlagen, den Quantendefekt (Stokes-Shift) zwischen der Längenwelle der Pumpstrahlung und der Längenwelle der Laserstrahlung so gering wie möglich zu halten. Dazu wird vorzugsweise ein bei etwa 1030 nm emittierender Festköperlaser, insbesondere ein diodengepumpter Yb:YAG-Scheibenlaser, als Pumplichtquelle für eine z.B. mit Ytterbium dotierte Laserfaser mit einer Emissionswellenlänge von 1060 - 1100 nm gewählt. Bei einer Pumpwellenlänge von 1030 nm und einer Emissionswellenlänge von 1080 nm beträgt die relative Wärmeerzeugung (ohne Berücksichtigung parasitärer Verluste, z.B. durch nichtstrahlende Effekte) lediglich 4,6%. Aufgrund des geringen Quantendefekts ergibt sich eine hohe Effizienz des Faserlasers, und ein differentieller optisch-optischer Wirkungsgrad von über 80% ist möglich.

Bei Verwendung eines Yb:YAG-Festkörperlasers ergibt sich eine Pumpwellenlänge von ca. 1030 nm. Diese Wellenlänge eignet sich für das Pumpen eines Faserverstärkers mit Ytterbium- oder Neodym-dotiertem Quarzglas als laseraktivem Faserkem. Zwar ist bei 1030 nm der Absorptionsquerschnitt des Ytterbium- oder Neodym-dotierten Faserverstärkers erheblich geringer als bei den bisher üblichen Pumpwellenlängen von 980 nm und 915 nm für Ytterbium bzw. 808 nm für Neodym, dies wird jedoch dadurch ausgeglichen, dass bei Verwendung einer Pumpquelle mit guter Strahlqualität und hoher Brillanz, insbesondere eines Scheibenlasers, ein kleiner Pumpkerndurchmesser der Laserfaser gewählt werden kann. Die Wärmerzeugung in der Faser ist beim Pumpen mit 1030 nm nur etwa halb so groß wie beim Pumpen mit 980 nm. Da die Anregung nicht aus dem Grundzustand, sondern aus einem relativ schwach thermisch besetzten Niveau erfolgt, nimmt die Absorption des Pumplichts mit steigender Temperatur stark zu. Die bei einem Quasi-Dreiniveausystem stark ausgeprägte spontane Emission (Fluoreszenz) benötigt zusätzliche Pumpleistung, der keine Nutzleistung gegenübersteht. Sofern die Pumpwellenlänge - wie bei den üblichen Pumpübergängen aus dem Grundzustand - kürzer als die mittlere Fluoreszenzwellenlänge ist, bedeutet dies eine zusätzliche thermische Belastung des laseraktiven Mediums. Ist jedoch - wie bei dem erfindungsgemäßen Faserlaser mit bei 1030 nm gepumptem Yb:Quarzglas als laseraktivem Medium - die Fluoreszenzstrahlung kurzwelliger als die Pumpstrahlung, so führt dies zu einer Kühlung des Lasermediums, die die thermische Belastung senkt.

Das erfindungsgemäße Pumpkonzept, d.h. die Verwendung eines Hochleistungs-Festkörperlasers mit einer Wellenlänge von 1030 nm und einer hohen Strahlqualität von M² < 30 zum Pumpen einer Double-Clad-Laserfaser mit einer Laserwellenlänge von 1060 - 1100 nm, hat folgende Vorteile:
● Die Ausgangsleistung des Faserverstärkers ist nicht durch die maximal verfügbare Brillanz der Pumpquelle begrenzt.
● Während die Wellenlänge von Laserdioden erheblichen statistischen sowie dynamischen Schwankungen aufgrund von Herstellungstoleranzen und Änderungen der Halbleitertemperatur (Erwärmung durch Verlustleistung, Kühlmitteltemperatur) unterliegt, ist die Wellenlänge des Festkörper-Pumplasers vergleichsweise stabil; die spektrale Emissionsbreite des Festkörperlasers ist ebenfalls erheblich geringer als die typischer Hochleistungslaserdioden. Somit ist die Absorption der Festkörperlaserstrahlung in der Laserfaser konstanter und typischerweise höher als die von Laserdioden der gleichen Nennwellenlänge. Der Faserlaser kann mit der stabileren Pumpquelle günstiger ausgelegt und effizienter betrieben werden.
● Einseitiges Endpumpen des Faserverstärkers ist aufgrund der hohen Leistungsdichte des Pumplasers möglich.
● Der geringe Quantendefekt hält die thermische Belastung der Laserfaser auch bei hoher Pumpleistung und geringer Faserlänge im tolerierbaren Bereich (< 100 W/m), so dass es nicht zu einer Zerstörung der Laserfaser kommt, und führt zu einem hohen optisch-optischen Wirkungsgrad.
● Aufgrund der hohen Strahlqualität des Pumplasers kann der Pumpkerndurchmesser der Laserfaser klein gewählt werden, was eine gute Pumplichtabsorption ermöglicht und die Kosten des Faserverstärkers reduziert.
● Die hohe Pumpleistungsdichte des Yb:YAG-Festkörperlasers und die dadurch bedingte hohe Pumplichtabsorption der Laserfaser ermöglichen eine kurze Faserlänge und damit die Begrenzung unerwünschter nichtlinearer Effekte in der Laserfaser.
● Die hohe Strahlqualität des Pumplasers erlaubt eine geringe numerische Apertur des Pumpkerns, so dass Quarzglas als Mantel für den Pumpkem verwendet werden kann. Dies verbessert die Verlustarmut des Faserlasers und erhöht seine Widerstandsfähigkeit gegen hohe Pumpleistungsdichten und damit seine Zuverlässigkeit.
● Das Risiko einer Zerstörung der Laserfaser durch Amplitudenfluktuationen, beispielsweise durch Rückwirkungen aus einem angeschlossenen Laserlichtkabel oder aus dem Materialbearbeitungsprozess, ist gemindert, da die Verstärkung im Lasermedium des Faserlaserverstärkers aufgrund des Ausbleichens der Absorption bei hoher Pumpleistungsdichte begrenzt ist. Das Ausbleichen ist durch das Pumpen direkt in das obere Lasemiveau stark ausgeprägt. Die thermische Besetzung des unteren Laserniveaus trägt ebenfalls zur Reduzierung der Verstärkung bei.
● Wird ein gütegeschalteter Festkörperlaser als Pumplaser genutzt, bietet dies die Möglichkeit zur Speicherung von Energie im Pumplaser. Damit ist es möglich, hohe Spitzenleistung der Pumpquelle bei moderater Dioden(-spitzen-)leistung zu erzielen.
● Der Pumplaser kann alternativ auch direkt zur Materialbearbeitung eingesetzt werden, wobei ein Umschalten zwischen Bearbeitung mit Pumplaser und mit Faserlaser sehr schnell (< 100 ms) erfolgen kann.

Vorzugsweise ist der Festkörperlaser ein diodengepumpter Yb:YAG-Scheibenlaser und besteht der Faserkem aus vollständig oder teilweise mit laseraktiven Ionen, bevorzugt Neodym³⁺ und/oder Ytterbium³⁺, dotiertem Quarzglas. Wenn der Faserkem außer den laseraktiven Ionen keine weiteren Dotierungen enthält, so maximiert dies die Belastbarkeit der Faser.

Alternativ ist der Faserkem neben den laseraktiven Ionen vollständig oder teilweise mit weiteren Ionen, beispielsweise Ge⁴⁺- oder F⁻, dotiert, um eine gewünschte Differenz der Brechungsindizes zwischen dem laseraktiven Faserkem und dem Pumpkem zu erzielen.

Vorteilhafterweise besteht der den laseraktiven Faserkern umgebende Pumpkem aus Quarzglas, das ganz oder teilweise mit Ionen, insbesondere Ge⁴⁺ oder F, dotiert sein kann und/oder periodisch angeordnete luftgefüllte Hohlräume enthalten kann, um eine gewünschte Differenz der Brechungsindizes zwischen dem laseraktiven Faserkem und dem Pumpkem zu erzielen.

Vorzugsweise weist die Double-Clad-Laserfaser einen den Pumpkern umgebenden Quarzglasmantel auf, der ganz oder teilweise mit Ionen, insbesondere F⁻, dotiert sein kann und/oder periodisch angeordnete luftgefüllte Hohlräume enthalten kann, um eine gewünschte numerischen Apertur des Pumpkems zu erzielen.

Bei besonders bevorzugten Ausführungsformen der Erfindung ist der Außendurchmesser des laseraktiven Faserkerns kleiner als ca. 50 µm und der Außendurchmesser des Pumpkems kleiner als 300 µm, insbesondere kleiner als 200 µm. Der den Pumpkem umgebende Quarzglasmantel weist vorzugsweise einen Außendurchmesser zwischen 100 µm und 600 µm, insbesondere zwischen 100 µm und 400 µm, auf. Die numerische Apertur des Pumpkerns liegt zwischen 0,15 und 0,7, insbesondere zwischen 0,2 und 0,35.

Um die Polarisation der in den Faserkem eingekoppelten und verstärkten Strahlung im Wesentlichen zu erhalten, können in die Laserfaser Spannung inzuzierende, nicht rotationssymmetrischen Strukturen eingebracht sein.

Eine günstige Ausführungsform der Erfindung sieht vor, dass der Ytterbium-dotierte Festkörperlaser über eine (passive) Lichtleitfaser an die Double-Clad-Laserfaser gekoppelt ist.

Vorzugsweise ist im Strahlengang zwischen Festkörperlaser und Laserfaser ein verkippter dichroitischer Spiegel so angeordnet, dass reflektierte Strahlung aus der Laserfaser nicht in den Pumplaser gelangt. Der dichroitische Spiegel kann gleichzeitig zur Ein- bzw. Auskopplung der zu verstärkenden bzw. verstärkten Strahlung in den bzw. aus dem Faserkem dienen.

Der Ytterbium-dotierte Festkörperlaser kann moduliert, insbesondere gütegeschaltet werden, um hohe Spitzenleistungen der Laserausgangsstrahlung zu erreichen.

Der erfindungsgemäße Faserverstärker kann mit geeigneten Resonatorspiegeln als Faseroszillator eingesetzt werden. Dabei sind die Resonatorspiegel vorzugsweise als Fiber-Bragg-Grating der Laserfaser ausgebildet. Alternativ kann einer der Resonatorspiegel mit dem dichroitischen Spiegel zum Schutz des Pumplasers vor Rückkopplung von Strahlung identisch sein.

Die Erfindung betrifft auch eine Laserbearbeitungsmaschine mit einem wie oben ausgebildeten Faseroszillator als Bearbeitungslaser. Dadurch wird eine bessere Strahlqualität erreicht, vorzugsweise eine nahezu beugungsbegrenzt Strahlqualität (Grundmode, M² < 1,5) für Laser mit mittleren Leistungen von über 500 W. Vorteilhafterweise ist bei einer solchen Laserbearbeitungsmaschine der Festkörperlaser auch direkt als Bearbeitungslaser einsetzbar.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fig. 1: schematisch den Aufbau des erfindungsgemäßen Hochleistungs-Faserverstärkers;
- Fig. 2: den Querschnitt der Laserfaser des Hochleistungs-Faserverstärkers gemäß II-II in Fig. 1; und
- Fig. 3: schematisch den Aufbau des erfindungsgemäßen Hochleistungs-Faseroszillators; und

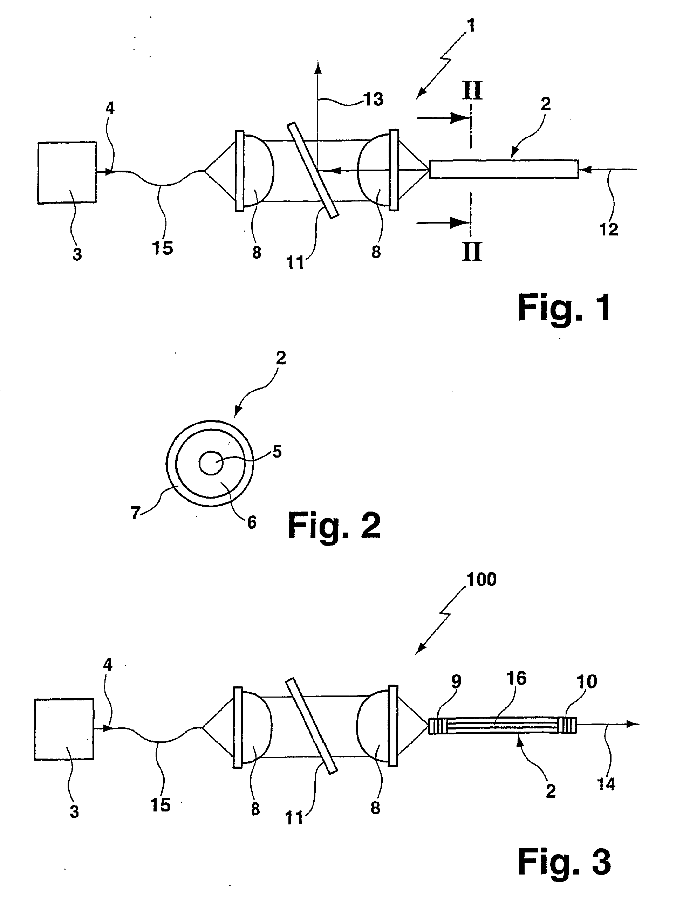

**Fig. 1** zeigt schematisch den Aufbau des erfindungsgemäßen Hochleistungs-Faserverstärkers **1,** der eine Double-Clad-Laserfaser **2** und einen Festkörperlaser **3** zum Pumpen der Double-Clad-Laserfaser 2 umfasst.

Der Festkörperlaser 3 ist ein diodengepumpter Ytterbium-dotierter Scheibenlaser, der Pumplicht 4 mit einer Wellenlänge von etwa 1030 nm, einer Strahlqualität von M² < 30 und einer Laserleistung von mindestens 600 Watt emittiert.

Die Double-Clad-Laserfaser 2 hat, wie in Fig. 2 gezeigt, einen separaten laseraktiven Faserkem 5 mit einem Außendurchmesser von mindestens 20 µm, einen den Faserkem 5 umgebenden Pumpkem 6 mit einem Außendurchmesser von mindestens 50 µm sowie einen äußeren Quarzglas-Mantel **7,** der den Pumpkern **6** umschließt. Der Faserkem 5 besteht aus mit Ytterbium und/oder Neodym dotiertem Quarzglas und emittiert im Bereich von 1060 bis 1100 nm. Der Faserkem 5 ist so ausgeführt, dass die Querschnittsfläche des Grundmodes möglichst groß ausfällt, wobei ein typischer Grundmodedurchmesser ca. 30 µm ist. Die für die Wellenleitung erforderlichen Brechzahlunterschiede zwischen inneren und äußeren Glasschichten werden entweder durch geeignete Dotierung des Quarzglases (Germanium für hohen Brechungsindex, Fluor für geringen Brechungsindex) oder durch Strukturierung des Glases (periodisch angeordnete Luft-"Poren", PCF-Faser) erzielt. Die numerische Apertur (N.A.) des Pumpkerns 6 liegt im Bereich 0,2-0,35 (Quarzglasmantel). Durch Kodotierung des Faserkerns 5 kann die numerische Apertur angepasst werden. Das wird bei hoher Yb-Dotierung notwendig, um bei großen Querschnitten trotzdem den Grundmode zu erzielen. In die Laserfaser 2 können Spannung induzierende, nicht rotationssymmetrische Strukturen 16 eingebracht werden. Die Laserfaser 2 wird vorzugsweise mit einem definierten Biegeradius aufgewickelt, um die Verluste für die höheren Transversalmoden zu erhöhen und so ihr Anschwingen zu verhindern. Die aktive Laserfaser 2 benötigt eine Kühlung; dies kann beispielsweise durch Anblasen der Laserfaser 2 mit Luft erfolgen. Alternativ kommt koaxiales Umströmen mit einem Kühlmedium (z.B. Luft) oder die Montage auf bzw. Einbettung in einen Kühlkörper (z.B. wassergekühlter Metallzylinder) in Frage.

Das Pumplicht 4 wird über ein Laserlichtkabel 15 und Linsen 8 oder alternativ über eine angespleißte passive Faser einseitig in die Laserfaser 2 eingekoppelt. Die Rückwirkung in den Festkörperlaser 3 wird durch einen im kollimierten Pumpstrahl verkippt angeordneten dichroitischen Spiegel **11** verhindert. Über diesen dichroitischen Spiegel 11 wird auch die im Faserverstärker 1 aus der unverstärkten Strahlung 12 erzeugte verstärkte Strahlung 13 ausgekoppelt.

Fig. 3 zeigt schematisch den Aufbau des erfindungsgemäßen Hochleistungs-Faseroszillators 100. Ein Fiber-Bragg-Grating am pumplaserseitigen Ende der Laserfaser 2 bildet den Endspiegel 9 des Faseroszillatorresonators, dessen Auskoppelspiegel 10 durch ein Fiber-Bragg-Grating oder mittels Fresnel-Reflexion der Faserendfläche gebildet ist. Alternativ können der Endspiegel und der Auskoppelspiegel auch als separate Bauteile ausgeführt sein, hierbei bestehen mehrere Optionen: z.B. im optischen Kontakt mit der Faserendfläche befindliche Spiegel (Butt-Coupling), im Abstand ihres Krümmungsradius vom Faserende angeordnete Konkavspiegel oder Planspiegel im kollimierten Pumpstrahl. Der Ausgangslaserstrahl **14** des Faseroszillators **100** hat eine Laserwellenlänge von 1060 bis 1100 nm und eine mittlere Laserleistung von über 500 W bei nahezu beugungsbegrenzter Strahlqualität. Die Laserfaser 2 kann Spannungen induzierende, nicht rotationssymmetrische Strukturen 16 aufweisen, um die Polarisation von in den Faserkem 5 eingekoppelter und verstärkter Strahlung im Wesentlichen zu erhalten.

Die Laserfaser **2** kann in ein Laserlichtkabel oder in die hinter dem Laserlichtkabel angeordnete Bearbeitungsoptik einer Laserbearbeitungsmaschine integriert sein. Der Ytterbium-dotierte Scheibenlaser weist typischerweise mehrere Abgänge für die Ausgangsstrahlung auf. An einen dieser Abgänge ist der Faseroszillator oder -verstärker angeschlossen, weitere Abgänge können über Laserlichtkabel direkt an Bearbeitungsoptiken angeschlossen sein, so dass die Ausgangsstrahlung des Scheibenlasers sowohl als Pumpstrahlung für den Faserverstärker oder -oszillator als auch direkt zur Materialbearbeitung genutzt werden kann. Prinzipiell können auch mehrere Faserlaser - entweder simultan durch Aufteilung der verfügbaren Pumpleistung, oder zeitlich nacheinander - mit einem einzelnen Festkörperlaser gepumpt werden.

## Patentansprüche

1. Hochleistungs-Faserverstärker (1) zum Erzeugen eines verstärkten Laserstrahls (13) mit einer Wellenlänge von 1060 bis 1100 nm und einer mittleren optischen Leistung von über 500 W und annähernd beugungsbegrenzter Strahlqualität von M² <1,5, umfassend:
eine Doppelmantelfaser (2), die einen separaten laseraktiven Faserkern (5) mit einem Außendurchmesser von mindestens 20 µm und einen den Faserkern (5) umgebenden Pumpkern (6) mit einem Außendurchmesser von mindestens 50 µm aufweist,
**gekennzeichnet durch** einen Ytterbium-dotierten Festkörperlaser (3), der Pumplicht (4) mit einer Wellenlänge von etwa 1030 nm, einer Strahlqualität von M² < 30 und einer Laserleistung von mindestens 600 Watt emittiert, zum Pumpen der Doppelmantelfaser (2).

2. Faserverstärker nach Anspruch 1, **dadurch gekennzeichnet, dass** der Festkörperlaser (3) ein diodengepumpter Yb:YAG-Scheibenlaser ist.

3. Faserverstärker nach Anspruch 1 oder 2, **dadurch gekennzeichnet, dass** der Faserkern (5) aus vollständig oder teilweise mit laseraktiven Ionen dotiertem Quarzglas besteht.

4. Faserverstärker nach einem der vorhergehenden Ansprüche, **dadurch gekennzeichnet, dass** der Faserkern (5) vollständig oder teilweise mit Ytterbium³+ -Ionen dotiert ist.

5. Faserverstärker nach einem der vorhergehenden Ansprüche, **dadurch gekennzeichnet, dass** der Faserkern (5) vollständig oder teilweise mit Neodym³⁺-Ionen dotiert ist.

6. Faserverstärker nach einem der vorhergehenden Ansprüche, **dadurch gekennzeichnet, dass** der Faserkern (5) sowohl mit Neodym³⁺-Ionen als auch mit Ytterbium³⁺-Ionen dotiert ist, wobei die unterschiedlichen Ionen entweder im gleichen (Teil-)Volumen vorgesehen oder vollständig oder teilweise räumlich getrennt sind.

7. Faserverstärker nach einem der vorhergehenden Ansprüche, **dadurch gekennzeichnet, dass** der laseraktive Faserkern (5) vollständig oder teilweise mit weiteren Ionen, insbesondere Ge⁴⁺ oder F⁻, dotiert ist.

8. Faserverstärker nach einem der vorhergehenden Ansprüche, **dadurch gekennzeichnet, dass** der Pumpkern (6) aus Quarzglas besteht.

9. Faserverstärker nach einem der vorhergehenden Ansprüche, **dadurch gekennzeichnet, dass** der Pumpkern (6) vollständig oder teilweise mit Ionen, insbesondere Ge⁴⁺ oder F⁻, dotiert ist.

10. Faserverstärker nach einem der vorhergehenden Ansprüche, **dadurch gekennzeichnet, dass** der Pumpkern (6) kleine, periodisch angeordnete, luftgefüllte Hohlräume enthält.

11. Faserverstärker nach einem der vorhergehenden Ansprüche, **dadurch gekennzeichnet, dass** die Laserfaser (2) einen den Pumpkern (6) umgebenden Pumpmantel (7) aufweist.

12. Faserverstärker nach Anspruch 11, **dadurch gekennzeichnet, dass** der Pumpmantel (7) aus Quarzglas besteht.

13. Faserverstärker nach Anspruch 11 oder 12, **dadurch gekennzeichnet, dass** der Pumpmantel (7) vollständig oder teilweise mit Ionen, insbesondere F⁻, dotiert ist.

14. Faserverstärker nach einem der Ansprüche 11 bis 13, **dadurch gekennzeichnet, dass** der Pumpmantel (7) luftgefüllte Hohlräume enthält.

15. Faserverstärker nach einem der Ansprüche 11 bis 14, **dadurch gekennzeichnet, dass** der Pumpmantel (7) einen Außendurchmesser zwischen 100 µm und 600 µm, insbesondere zwischen 100 µm und 400 µm, aufweist.

16. Faserverstärker nach einem der vorhergehenden Ansprüche, **dadurch gekennzeichnet, dass** der Außendurchmesser des laseraktiven Faserkerns (5) kleiner als ca. 50 µm ist.

17. Faserverstärker nach einem der vorhergehenden Ansprüche, **dadurch gekennzeichnet, dass** der Außendurchmesser des Pumpkerns (6) kleiner als 300 µm, insbesondere kleiner als 200 µm ist.

18. Faserverstärker nach einem der vorhergehenden Ansprüche, **dadurch gekennzeichnet, dass** die numerische Apertur des Pumpkerns (6) zwischen 0,15 und 0,7, insbesondere zwischen 0,2 und 0,35, liegt.

19. Faserverstärker nach einem der vorhergehenden Ansprüche, **dadurch gekennzeichnet, dass** die Laserfaser (2) die Polarisation der in den Faserkern (5) eingekoppelten und verstärkten Strahlung im Wesentlichen erhält.

20. Faserverstärker nach Anspruch 19, **dadurch gekennzeichnet, dass** die Laserfaser (2) zur Polarisationserhaltung Spannungen induzierende, nicht rotationssymmetrische Strukturen (16) aufweist.

21. Faserverstärker nach einem der vorhergehenden Ansprüche, **dadurch gekennzeichnet, dass** der Festkörperlaser (3) über eine Lichtleitfaser (15) an die Laserfaser (2) gekoppelt ist.

22. Faserverstärker nach einem der vorhergehenden Ansprüche, **dadurch gekennzeichnet, dass** ein dichroitischer Spiegel (11) zwischen Festkörperlaser (3) und Laserfaser (2) angeordnet ist.

23. Faserverstärker nach einem der vorhergehenden Ansprüche, **dadurch gekennzeichnet, dass** der Festkörperlaser (3) moduliert, insbesondere gütegeschaltet, ist.

24. Hochleistungs-Faseroszillator (100) mit einem Faserverstärker (1) nach einem der vorhergehenden Ansprüche, wobei die Laserfaser (2) zwischen Resonatorspiegeln (9, 10) angeordnet ist.

25. Faseroszillator nach Anspruch 24, **dadurch gekennzeichnet, dass** ein zwischen Festkörperlaser (3) und Laserfaser (2) angeordneter Resonatorspiegel (9) als dichroitischer Spiegel ausgebildet ist.

26. Faseroszillator nach Anspruch 24 oder 25, **dadurch gekennzeichnet, dass** mindestens einer der Resonatorspiegel (9, 10) ein Fiber-Bragg-Grating ist.

27. Laserbearbeitungsmaschine mit einem Faseroszillator (100) nach einem der Ansprüche 24 bis 26 als Bearbeitungslaser.

28. Laserbearbeitungsmaschine nach Anspruch 27, bei der der Festkörperlaser (3) auch direkt zur Materialbearbeitung vorgesehen ist.

## Claims

1. High-power fibre amplifier (1) for producing an amplified laser beam (13) having a wavelength of from 1060 to 1100 nm and a mean optical power of over 500 W and a substantially diffraction-limited beam quality of M² < 1.5, comprising:
a double-clad fibre (2) which has a separate laser-active fibre core (5) having an outside diameter of at least 20µm and a pump core (6) which surrounds the fibre core (5) and which has an outside diameter of at least 50µm,
**characterised by** an ytterbium-doped solid-state laser (3) which emits pump light (4) having a wavelength of approximately 1030 nm, a beam quality of M² < 30 and a laser power of at least 600 Watt in order to pump the double-clad fibre (2).

2. Fibre amplifier according to claim 1, **characterised in that** the solid-state laser (3) is a diode-pumped Yb:YAG disk type laser.

3. Fibre amplifier according to claim 1 or claim 2, **characterised in that** the fibre core (5) comprises silica glass which is doped completely or partially with laser-active ions.

4. Fibre amplifier according to any one of the preceding claims, **characterised in that** the fibre core (5) is doped completely or partially with ytterbium³⁺ ions.

5. Fibre amplifier according to any one of the preceding claims, **characterised in that** the fibre core (5) is doped completely or partially with neodymium³⁺ ions.

6. Fibre amplifier according to any one of the preceding claims, **characterised in that** the fibre core (5) is doped both with neodymium³⁺ ions and with ytterbium³⁺ ions, with the different ions being provided either in identical (part) volumes or being spatially separated completely or partially.

7. Fibre amplifier according to any one of the preceding claims, **characterised in that** the laser-active fibre core (5) is doped completely or partially with additional ions, in particular Ge⁴⁺ or F⁻ .

8. Fibre amplifier according to any one of the preceding claims, **characterised in that** the pump core (6) comprises silica glass.

9. Fibre amplifier according to any one of the preceding claims, **characterised in that** the pump core (6) is doped completely or partially with ions, in particular Ge⁴⁺ or F⁻.

10. Fibre amplifier according to any one of the preceding claims, **characterised in that** the pump core (6) contains small, periodically arranged, air-filled cavities.

11. Fibre amplifier according to any one of the preceding claims, **characterised in that** the laser fibre (2) has a pump cladding (7) which surrounds the pump core (6).

12. Fibre amplifier according to claim 11, **characterised in that** the pump cladding (7) comprises silica glass.

13. Fibre amplifier according to claim 11 or claim 12, **characterised in that** the pump cladding (7) is doped completely or partially with ions, in particular F⁻.

14. Fibre amplifier according to any one of claims 11 to 13, **characterised in that** the pump cladding (7) contains air-filled cavities.

15. Fibre amplifier according to any one of claims 11 to 14, **characterised in that** the pump cladding (7) has an outside diameter of between 100µm and 600µm, in particular between 100µm and 400µm.

16. Fibre amplifier according to any one of the preceding claims, **characterised in that** the outside diameter of the laser-active fibre core (5) is smaller than approximately 50µm.

17. Fibre amplifier according to any one of the preceding claims, **characterised in that** the outside diameter of the pump core (6) is smaller than 300µm, in particular smaller than 200µm.

18. Fibre amplifier according to any one of the preceding claims, **characterised in that** the numerical aperture of the pump core (6) is between 0.15 and 0.7, in particular between 0.2 and 0.35.

19. Fibre amplifier according to any one of the preceding claims, **characterised in that** the laser fibre (2) substantially acquires the polarisation of the radiation which is input in the fibre core (5) and amplified.

20. Fibre amplifier according to claim 19, **characterised in that** the laser fibre (2) has non-rotationally-symmetrical structures (16) which induce stresses in order to acquire polarisation.

21. Fibre amplifier according to any one of the preceding claims, **characterised in that** the solid-state laser (3) is coupled to the laser fibre (2) via a light guide fibre (15).

22. Fibre amplifier according to any one of the preceding claims, **characterised in that** a dichroitic mirror (11) is arranged between the solid-state laser (3) and the laser fibre (2).

23. Fibre amplifier according to any one of the preceding claims, **characterised in that** the solid-state laser (3) is modulated, in particular Q-switched.

24. High-power fibre oscillator (100) having a fibre amplifier (1) according to any one of the preceding claims, with the laser fibre (2) being arranged between resonator mirrors (9,10).

25. Fibre oscillator according to claim 24, **characterised in that** a resonator mirror (9) which is arranged between the solid-state laser (3) and the laser fibre (2) is in the form of a dichroitic mirror.

26. Fibre oscillator according to claim 24 or 25, **characterised in that** at least one of the resonator mirrors (9,10) is a fibre Bragg grating.

27. Laser processing machine having a fibre oscillator (100) according to any one of claims 24 to 26 as a processing laser.

28. Laser processing machine according to claim 27, wherein the solid-state laser (3) is also provided directly for material processing.

## Revendications

1. Amplificateur à fibre de grande puissance (1) pour générer un faisceau laser amplifié (13) d'une longueur d'onde de 1060 à 1100 nm, d'une puissance optique moyenne supérieure à 500 W et d'une qualité de faisceau approximativement limitée par diffraction de M² < 1,5, comprenant :
une fibre à double gaine (2) qui présente un coeur de fibre laser actif séparé (5) d'un
diamètre extérieur d'au moins 20 µm et un coeur de pompage (6) entourant le coeur de
fibre (5) d'un diamètre extérieur d'au moins 50 µm,
**caractérisé par** un laser à solide (3) dopé à l'ytterbium qui émet une lumière de pompage (4) d'une longueur d'onde d'environ 1030 nm, d'une qualité de faisceau de M² < 30 et d'une puissance laser d'au moins 600 watts, pour pomper la fibre à double gaine (2).

2. Amplificateur à fibre selon la revendication 1, **caractérisé en ce que** le laser à solide (3) est un laser à disque Yb:YAG pompé par diode.

3. Amplificateur à fibre selon la revendication 1 ou 2, **caractérisé en ce que** le coeur de fibre (5) est en verre de quartz entièrement ou partiellement dopé avec des ions laser actifs.

4. Amplificateur à fibre selon l'une des revendications précédentes, **caractérisé en ce que** le coeur de fibre (5) est entièrement ou partiellement dopé avec des ions ytterbium³⁺.

5. Amplificateur à fibre selon l'une des revendications précédentes, **caractérisé en ce que** le coeur de fibre (5) est entièrement ou partiellement dopé avec des ions néodyme³⁺.

6. Amplificateur à fibre selon l'une des revendications précédentes, **caractérisé en ce que** le coeur de fibre (5) est dopé aussi bien avec des ions néodyme³⁺ qu'avec des ions ytterbium³⁺, les différents ions étant soit prévus dans le même volume (partiel), soit entièrement ou partiellement séparés spatialement.

7. Amplificateur à fibre selon l'une des revendications précédentes, **caractérisé en ce que** le coeur de fibre laser actif (5) est entièrement ou partiellement dopé avec des ions supplémentaires, en particulier Ge⁴⁺ ou F⁻.

8. Amplificateur à fibre selon l'une des revendications précédentes, **caractérisé en ce que** le coeur de pompage (6) est en verre de quartz.

9. Amplificateur à fibre selon l'une des revendications précédentes, **caractérisé en ce que** le coeur de pompage (6) est entièrement ou partiellement dopé avec des ions, en particulier Ge⁴⁺ ou F⁻.

10. Amplificateur à fibre selon l'une des revendications précédentes, **caractérisé en ce que** le coeur de pompage (6) contient de petites cavités remplies d'air disposées périodiquement.

11. Amplificateur à fibre selon l'une des revendications précédentes, **caractérisé en ce que** la fibre laser (2) présente une gaine de pompage (7) entourant le coeur de pompage (6).

12. Amplificateur à fibre selon la revendication 11, **caractérisé en ce que** la gaine de pompage (7) est en verre de quartz.

13. Amplificateur à fibre selon la revendication 11 ou 12, **caractérisé en ce que** la gaine de pompage (7) est entièrement ou partiellement dopée avec des ions, en particulier F⁻.

14. Amplificateur à fibre selon l'une des revendications 11 à 13, **caractérisé en ce que** la gaine de pompage (7) contient des cavités remplies d'air.

15. Amplificateur à fibre selon l'une des revendications 11 à 14, **caractérisé en ce que** la gaine de pompage (7) présente un diamètre extérieur compris entre 100 µm et 600 µm, en particulier entre 100 µm et 400 µm.

16. Amplificateur à fibre selon l'une des revendications précédentes, **caractérisé en ce que** le diamètre extérieur du coeur de fibre laser actif (5) est inférieur à environ 50 µm.

17. Amplificateur à fibre selon l'une des revendications précédentes, **caractérisé en ce que** le diamètre extérieur du coeur de pompage (6) est inférieur à 300 µm, en particulier inférieur à 200 µm.

18. Amplificateur à fibre selon l'une des revendications précédentes, **caractérisé en ce que** l'ouverture numérique du coeur de pompage (6) est comprise entre 0,15 et 0,7, en particulier entre 0,2 et 0,35.

19. Amplificateur à fibre selon l'une des revendications précédentes, **caractérisé en ce que** la fibre laser (2) maintient essentiellement la polarisation du rayonnement couplé et amplifié dans le coeur de fibre (5).

20. Amplificateur à fibre selon la revendication 19, **caractérisé en ce que** la fibre laser (2) présente, pour le maintien de la polarisation, des structures induisant des tensions, non à symétrie de révolution.

21. Amplificateur à fibre selon l'une des revendications précédentes, **caractérisé en ce que** le laser à solide (3) est couplé à la fibre laser (2) par une fibre optique (15).

22. Amplificateur à fibre selon l'une des revendications précédentes, **caractérisé en ce qu'**un miroir dichroïque (11) est disposé entre le laser à solide (3) et la fibre laser (2).

23. Amplificateur à fibre selon l'une des revendications précédentes, **caractérisé en ce que** le laser à solide (3) est modulé, en particulier déclenché.

24. Oscillateur à fibre de grande puissance (100) avec un amplificateur à fibre (1) selon l'une des revendications précédentes, la fibre laser (2) étant disposée entre des miroirs de résonateur (9, 10).

25. Oscillateur à fibre selon la revendication 24, **caractérisé en ce qu'**un miroir de résonateur (9) disposé entre le laser à solide (3) et la fibre laser (2) est réalisé sous forme de miroir dichroïque.

26. Oscillateur à fibre selon la revendication 24 ou 25, **caractérisé en ce qu'**au moins un des miroirs de résonateur (9, 10) est un réseau de Bragg fibré.

27. Machine d'usinage par laser avec un oscillateur à fibre de grande puissance (100) selon l'une des revendications 24 à 26 comme laser d'usinage.

28. Machine d'usinage par laser selon la revendication 27, dans laquelle le laser à solide (3) est aussi prévu directement pour l'usinage de matériau.
